# EUROPEAN PATENT APPLICATION

(11) **EP 2 003 859 A1**
(43) Date of publication of application: **17.12.2008**
(21) Application number: 07290747.0
(22) Date of filing: 15.06.2007
(51) Int. Cl.: H04L 29/12

(54) **Telecommunication server hierarchy**

(71) Applicant: Alcatel Lucent, 75008 Paris (FR)
(72) Inventor: van Ackere, Michel, 9100 Sint-Niklaas (BE); Weytens, Inez, 2288 Bouwel (BE)
(74) Representative: Narmon, Gisèle Marie Thérèse

(57) **Abstract**

A method for distributing unique identifiers in a telecommunication network comprising at least one hierarchical decision server, e.g. local DHCP server (DHCP2, DHCP3), coupled to an external/ centralized application or External Notification Point (ENP). The hierarchical decision server uses identifiers comprising at least a local_IP-address and a realm_identifier, and the method comprises the steps of the hierarchical decision server sending a proposed_local_IP-address and a proposed_realm_identifier to a Realm Distribution Server or External Decision Point (EDP) coupled to the hierarchical decision server and to the external/centralized application, the Realm Distribution Server verifying, and altering if needed, the proposed_local_IP-address and the proposed_realm_identifier, and the Realm Distribution Server returning to the hierarchical decision server an assigned_local_IP-address and an assigned_realm_identifier. The hierarchical decision server (DHCP2) may also send a bind notification and indicate to the External Decision Point (EDP) that it acts not only as a hierarchical decision server but also as a hierarchical notification server. However, in a preferred embodiment, the External Decision Point sends a bind notification and acts as a notification server.

## Description

The present invention relates to a method for distributing unique identifiers in a telecommunication network comprising at least one hierarchical decision server adapted to be coupled to an external/ centralized application, said hierarchical decision server using identifiers comprising at least a local_IP-address and a realm_identifier.

Such a method is generally known in the field of telecommunications. Therein, an external/ centralized application, hereafter also called External Notification Point, has no direct awareness of IP-addresses that are assigned by a hierarchical decision server. Several hierarchical decision servers, that preferably are local DHCP servers, may assign a same local IP-address and notify (via a bind notification) the External Notification Point about them.

In order to make a distinction in the External Notification Point, the hierarchical decision server needs to add a discriminating realm_identifier to its bind notification. This realm_identifier must be available in the hierarchical decision server.

Moreover, all hierarchical decision servers must be able to send out a bind notification as a result of the assignment of an IP-address. However, this is difficult to accomplish as it is not part of the "standard" behavior in case of a local DHCP server.

The external/ centralized application or External Notification Point must be able/ prepared to accept bind notifications from a large number of hierarchical decision servers. This may introduce security issues or become unmanageable from the point of view of the owner of the ENP.

Currently, the realm_identifier must be configured (typically manually) in each separate local DHCP server. This is cumbersome, error prone and virtually unmanageable from the point of view of the owner(s) of the hierarchical decision server(s).

An object of the present invention is to provide a method of the above known type but wherein the identifiers, i.e. at least the local_IP-address and the realm_identifier, are optimized.

According to the invention, this object is achieved due to the fact that said method comprises the steps of:
- said hierarchical decision server sending a proposed_local_IP-address and a proposed_realm_identifier to a Realm Distribution Server coupled to said hierarchical decision server and adapted to be coupled to said extemal/centralized application;
- said Realm Distribution Server verifying, and altering if needed, said proposed_local_IP-address and said proposed_realm_identifier; and
- said Realm Distribution Server returning to said hierarchical decision server an assigned_Iocal_IP-address and an assigned_realm_identifier.

In this way, the hierarchical decision server is put under the control of the Realm Distribution Server, hereafter also called External Decision Point. The Realm Distribution Server can be seen as a central decision point from which the hierarchical decision server that assigns IP-addresses dynamically learns the realm for which the IP-addresses apply. This solution allows bringing locally assigned IP-addresses under the control of Realm Distribution Server. The Realm Distribution server then acts as a root-server contrarily to the hierarchical decision server that does no longer act as a root-server.

It is to be noted that the locally assigned IP-address may be overruled (altered) with the IP-address that is assigned by the Realm Distribution Server acting as root-server.

Another characterizing embodiment of the present invention is that said hierarchical decision server indicating to said Realm Distribution Server that said hierarchical decision server acts as a hierarchical notification server and sending a bind notification.

In this way, the Realm Distribution server acts as a root-server and the hierarchical decision server acts as a notification server. The roles of the servers can be decided via root-server indicators and notification server indicators.

Also another characterizing embodiment of the present invention is that said method comprises the step of said Realm Distribution Server acting as a notification server and sending a bind notification.

This solution allows having the bind notification generated and sent from a centralized Realm Distribution Server or External Decision Point, rather than from a large set of distributed hierarchical decision servers. It allows for a large degree of flexibility in defining who has control on the final decision about assigned_local_IP-addresses and assigned_realm_identifier and it can fairly easily be accommodated in the commonly used DHCP protocol.

In a preferred characterizing embodiment of the present invention, the step of sending said bind notification is triggered by a notify flag further comprised in said identifiers and indicating which, amongst said hierarchical decision server and said Realm Distribution Server, acts as a hierarchical notification server.

Still another characterizing embodiment of the present invention is that said method comprises the step of transmitting said bind notification, said assigned_local_IP-address and said assigned_realm_identifier to said external/ centralized application.

In other words, the extemal/centralized application or External Notification Point is notified about the assigned IP-address and realm in use from the root-server, and is notified about the bind notification from the notification server. Furthermore, root-server and notification server could be a same server.

Further characterizing embodiments of the present method are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

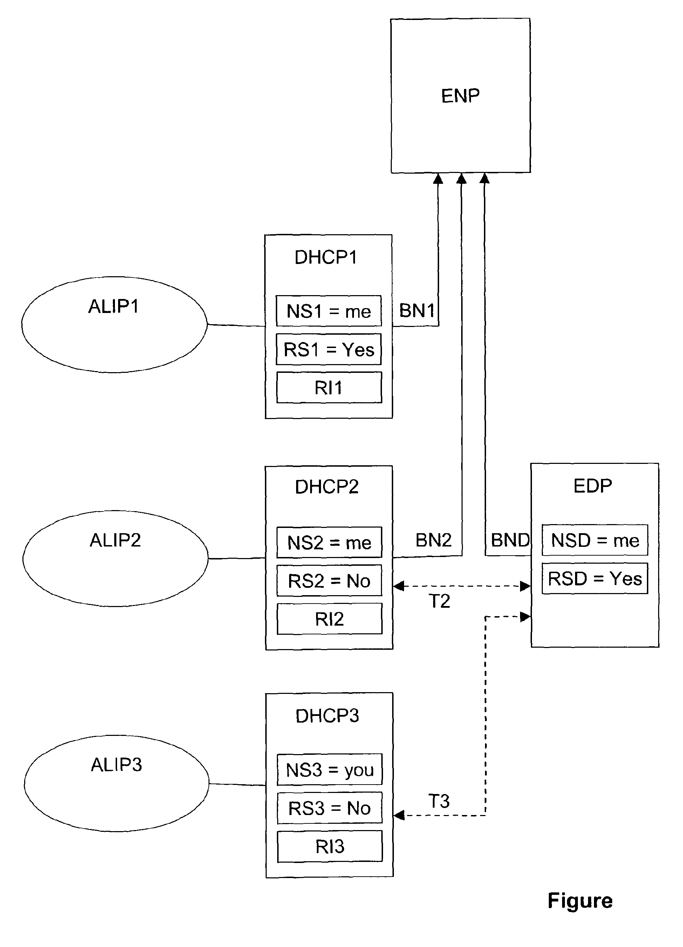

The above and other objects and features of the invention will become more apparent and the invention itself will be best understood by referring to the following description of an embodiment taken in conjunction with the accompanying drawing wherein the Figure represents a telecommunication network comprising local DHCP servers and a Realm Distribution Server using a method for distributing unique identifiers according to the invention.

The Figure is used to describe a method for distributing unique identifiers in a telecommunication network comprising at least one hierarchical decision server coupled to an extemal/centralized application generally known as External Notification Point ENP. The hierarchical decision server is preferably a local DHCP server that uses identifiers comprising at least a local_IP-address and a realm_identifier.

Three local DHCP servers DHCP1, DHCP2 and DHCP3 are shown to represent three different implementations of the method according to the invention. The idea is to put a local DHCP server under the control of a Realm Distribution Server generally known as External Decision Point EDP, which is for instance a Central DHCP server.

The part of the Figure associated to the local DHCP server DHCP1 represents the closest match to current state of the art. DHCP1 acts as a root-server, indicated in the Figure by "RS 1 = Yes", so that it makes the final decision on the realm and on the local IP-address ALIP1. DHCP1 also acts as the notification-server, indicated by "NS 1 = me", so it sends the bind notification to the external notification point ENP.

In this case, the local DHCP server DHCP1 needs to be configured with the realm_identifier RI1 and needs to be equipped with a mechanism to send the bind notification BN1.

The part of the Figure associated to the local DHCP server DHCP2 implements the fact that this DHCP2, under control of the external decision point EDP, is adapted to dynamically learn the realm for which DHCP2 assigns IP-addresses. In other words, the local DHCP server DHCP2 does not act as a root-server, "RS2 = No", so it does not make the final decision on the local IP-address or realm. The realm distribution server or external decision point EDP is the root-server coupled to DHCP2 via a bidirectional link T2.

However, DHCP2 still acts as the notification-server, "NS2 = me", so it sends the bind notification BN2 to the extemal/centralized application or external notification point ENP.

In comparison with DHCP1, DHCP2 needs to be additionally equipped with a mechanism to retrieve the realm_identifier from the external decision point EDP, e.g. under the form of a request "GetMyRealmIdentifier" with a "notify flag = me" (not shown). The external decision point EDP will then verify, and potentially alter, the proposed_local_IP-address and the proposed_realm_identifier, return the assigned_local_IP-address ALIP2 and the assigned_realm_identifier RI2 to the local DHCP server DHCP2. This mechanism must operate prior to assigning the assigned_local_IP-address ALIP2 to the requestor and prior to generating the bind notification BN2 in the local DHCP server DHCP2.

The part of the Figure associated to the local DHCP server DHCP3 also implements the fact that this DHCP3, under control of the external decision point EDP, is adapted to dynamically learn the realm for which DHCP3 assigns IP-addresses.

DHCP3 does not act as a root-server, "RS3 = No", so it does not make the final decision on the local IP-address or realm. This final decision is taken by the external decision point EDP, as indicated by "RSD = Yes".

Furthermore, DHCP3 also does not act as a notification-server, "NS3 = you", so it does not send any bind notification to the extemal/centralized application or external notification point ENP. The local DHCP server DHCP3 is therefore coupled to the realm distribution server or external decision point EDP via a bidirectional link T3, this external decision point EDP being the notification-server. As a consequence, the external decision point EDP sends the bind notification, "NSD = me".

In comparison with DHCP1, DHCP3 needs to be additionally equipped with a mechanism to retrieve the realm_identifier from the external decision point EDP, "GetMyRealmIdentifier" with "notify flag = you" (not shown). The external decision point EDP will then verify, and potentially alter, the proposed_local_IP-address ALIP3 and the proposed_realm_identifier, return the assigned_local_IP-address and the assigned_realm_identifier RI3 to the local DHCP server DHCP3 and generate the associated bind notification BND to the external notification point ENP. This mechanism must operate prior to assigning the assigned_local_IP-address ALIP3 to the requestor.

It is to be noted that for the local DHCP servers DHCP1 and DHCP2, the bind notification may be sent to the external decision point EDP, rather than to the external notification point ENP. In that case, the external decision point EDP must not alter the information in the bind notification, but forward it as received to the external notification point ENP.

In a variant implementation, the bind notification mechanism and the "GetMyRealmIdentifier" mechanism could be executed as an extension to the DHCP protocol. The external decision point EDP can then be an extended DHCP server. Both local DHCP server and EDP DHCP server can then have the same implementation for reacting on an incoming bind notification and generating the "GetMyRealmIdentifier" request (depending on the settings for root-server and/or notification-server). Although a bind notification will typically not come in on a local DHCP server, and the external decision point EDP will typically not generate the getMyRealmIdentifier request.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method for distributing unique identifiers in a telecommunication network comprising at least one hierarchical decision server (DHCP2, DHCP3) adapted to be coupled to an external/ centralized application (ENP),
said hierarchical decision server using identifiers comprising at least a local_IP-address and a realm_identifier,
***characterized in that*** said method comprises the steps of:
- said hierarchical decision server (DHCP2, DHCP3) sending a proposed_local_IP-address and a proposed_realm_identifier to a Realm Distribution Server (EDP) coupled to said hierarchical decision server and adapted to be coupled to said extemal/centralized application (ENP);
- said Realm Distribution Server verifying, and altering if needed, said proposed_local_IP-address and said proposed_realm_identifier; and
- said Realm Distribution Server returning to said hierarchical decision server an assigned_local_IP-address (ALIP2, ALIP3) and an assigned_realm_identifier (RI2, RI3).

2. The method according to claim 1, ***characterized in that*** said method comprises the step of said hierarchical decision server (DHCP2) indicating to said Realm Distribution Server (EDP) that said hierarchical decision server acts as a hierarchical notification server (NS2) and sending a bind notification (BN2).

3. The method according to claim 1, ***characterized in that*** said method comprises the step of said Realm Distribution Server (EDP) acting as a notification server (NSD) and sending a bind notification (BND).

4. The method according to any of the claims 2 or 3, ***characterized in that*** the step of sending said bind notification is triggered by a notify flag further comprised in said identifiers and indicating which, amongst said hierarchical decision server (DHCP2) and said Realm Distribution Server (EDP), acts as a hierarchical notification server (NS2; NSD).

5. The method according to claim 4, ***characterized in that*** said method comprises the step of transmitting said bind notification, said assigned_local_IP-address and said assigned_realm_identifier to said external/ centralized application (ENP).

6. The method according to claim 1, ***characterized in that*** said hierarchical decision server (DHCP2, DHCP3) is a local DHCP server.

7. The method according to claim 1, ***characterized in that*** said external/ centralized application (ENP) is an External Notification Point.

8. The method according to claim 1, ***characterized in that*** said Realm Distribution Server (EDP) is an External Decision Point.

9. The method according to claim 1, ***characterized in that*** the assigned_local_IP-address (ALIP2, ALIP3) and the assigned_realm_identifier (RI2, RI3) returned by said Realm Distribution Server (EDP) are respectively derived from the proposed_local_IP-address and the proposed_realm_identifier send by said hierarchical decision server (DHCP2, DHCP3).
